# EUROPÄISCHE PATENTSCHRIFT

(11) **EP 0 885 090 B1**
(45) Veröffentlichungstag und Bekanntmachung des Hinweises auf die Patenterteilung: **07.03.2001**
(21) Anmeldenummer: 97947705.6
(22) Anmeldetag: 22.10.1997
(51) Int. Cl.: B24C 9/00

(54) **VORRICHTUNG ZUR ABRASIVMITTELRÜCKGEWINNUNG BEI WASSERSTRAHLSCHNEIDANLAGEN**
DEVICE FOR RECOVERING ABRASIVES IN WATER JET CUTTING SYSTEMS
DISPOSITIF POUR RECYCLER DES ABRASIFS DANS DES INSTALLATIONS DE DECOUPE PAR JET D'EAU

(30) Priorität: 30.10.1996 DE 19643807
(43) Veröffentlichungstag der Anmeldung: 23.12.1998
(73) Patentinhaber: SÄCHSISCHE WERKZEUG UND SONDERMASCHINEN GmbH, 01904 Neukirch (DE)
(72) Erfinder: HERRMANN, Rolf, D-02689 Sohland (DE); LEHMANN, Alfred, D-01877 Schmölln (DE); WALDEN, Matthias, D-02689 Sohland (DE); WOBST, Gottfried, D-01904 Ringenhain (DE)
(86) Internationale Anmeldenummer: DE9702468
(87) Internationale Veröffentlichungsnummer: WO9818598

(56) Entgegenhaltungen:
- EP-A- 0 158 743
- DE-A- 4 303 868
- DE-C- 4 106 831
- US-A- 4 872 975

## Beschreibung

Die Erfindung betrifft eine Vorrichtung zur Abrasivmittelrückgewinnung von einsatzfähigen Abrasivmittel bei Wasserstrahlschneidanlagen aus dem mit Schneidgutresten und gebrauchten Abrasivmittel belasteten Brauchwasser einer Wasserstrahlauffangeinrichtung.

Aus dem USA-Patent 48 72 975 10/1989 Benson ... 210/99 ist ein System zur Aussonderung von Abrasivmaterial aus einem Fluid bekannt, bei dem das in einem Auffangbehälter gesammelte Fluid, das Abrasivmittel enthält, einem Separator zugeführt wird. In dem Separator wird das Brauchwasser vom Schlamm getrennt. Der Schlamm wird einem Absetzbecken zugeführt, aus dem das abgesetzte Abrasivmittel entsorgt wird. Dieses System dient der Brauchwasserrückgewinnung durch Trennung des Brauchwassers vom Schlamm. Aus der Patentschrift DE 41 06 831 B 26 F 3/00 ist eine Anlage zur Rückgewinnung des Schleifmaterials beim Wasserstrahl-Schneiden bekannt, bei der das mit Schneidgutresten versetzte Schleifmaterial mit einem Kratzer und einem Förderband aus dem Auffangbecken für den Reststrahl einer Schneidanlage zu einer Trockenanlage befördert wird. Durch die Trockenanlage wird das Schleifmaterial hindurch befördert, durch Wärmebestrahlung getrocknet und anschließend in einem Windsichter in einen Sortierkanal geblasen. Die Partikel des Schleifmaterials werden im Luftstrom ihrer Größe entsprechend weit mitgerissen und fallen in die den Größenklassen zugeordneten Schlitze des Sortierkanals. Das Schleifmaterial kann nun den Fraktionen entsprechend wieder verwendet werden. Staub soll dabei als gesonderte Fraktion anfallen. Es kann aber ein gewisser Staubanteil in jeder anderen Fraktion nicht vermieden werden.

Eine Vorrichtung zur Schneidmittelrückgewinnung beim Abrasivwasserstrahlschneiden ist aus der Patentschrift DE 43 34 673 B26F 3/00 bekannt, bei der das Schneidmittel unter den Auslaßöffnungen von Trichterelementen in einer Ringleitung mit Förderwasser in einen Sedimentationsbehälter ausgeschwemmt wird. Hier wird die Weiterbehandlung des Abrasivmittels nicht beschrieben.

Weiterhin ist eine Anlage zur Trennung und Rückgewinnung von Abrasivmitteln bei der Wasserabrasivstrahlanwendung aus der DE OS 43 03 868 bekannt. Aus der aus dem Auffangsystem ausgetragenen Suspension von brauchbaren Abrasivmittel, Schlamm, Schneidgutresten und Brauchwasser wird in einem ersten Hydrozyklon die Abrasivmittelfraktion ausgetragen und der weiteren Bearbeitung zugeführt. Mit einem umlaufenden Bandfilter wird das restliche Brauchwasser aus dem Abrasivmittel entfernt. In einem nachfolgenden Drehrohrofen wird das Abrasivmittel getrocknet und einem Sammelbehälter zugeführt. In einem weiteren Hydrozyklon wird das Brauchwasser von dem verbliebenen Schlamm getrennt, der einer Entsorgungsstation zugeführt wird. Hierbei erfolgt keine Aussonderung des im brauchbaren Abrasivmittel enthaltenen und vom ersten Hydrozyklon mitgelieferten Staubes.

Ziel und Aufgabe der Erfindung ist es, eine Vorrichtung zur Abrasivmittelrückgewinnung bei Wasserstrahlschneidanlagen aus dem gebrauchten Abrasivmittel zu schaffen, bei der das Abrasivmittel trocken und weitgehend staubfrei anfällt.

Die Lösung dieser Aufgabe ist Gegenstand des ersten Anspruchs. Weitere vorteilhafte Ausgestaltungen der Erfindung sind Gegenstand der Unteransprüche.

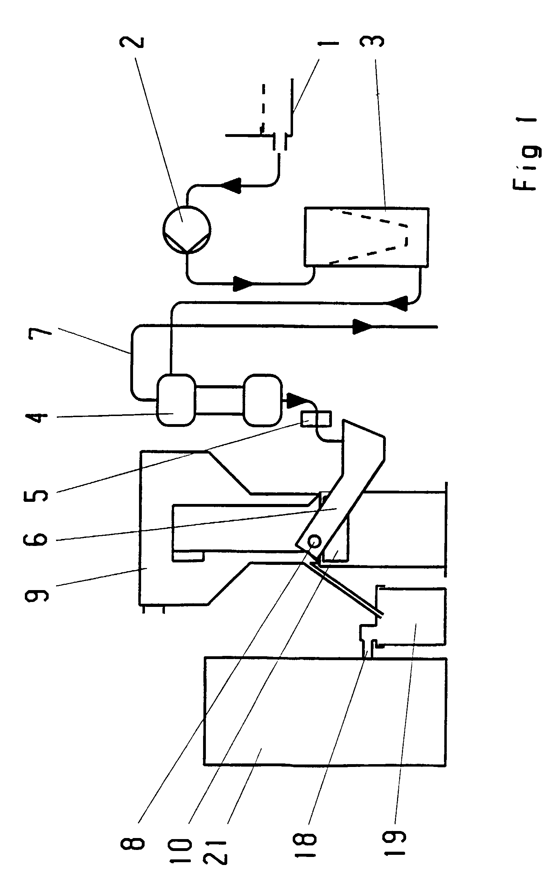

Die Erfindung soll nachstehend an Hand eines Ausführungsbeispiels näher erläutert werden. Die zugehörige Zeichnung zeigt in
Fig. 1 den schematischen Aufbau der Vorrichtung zur Abrasivmittelrückgewinnung,

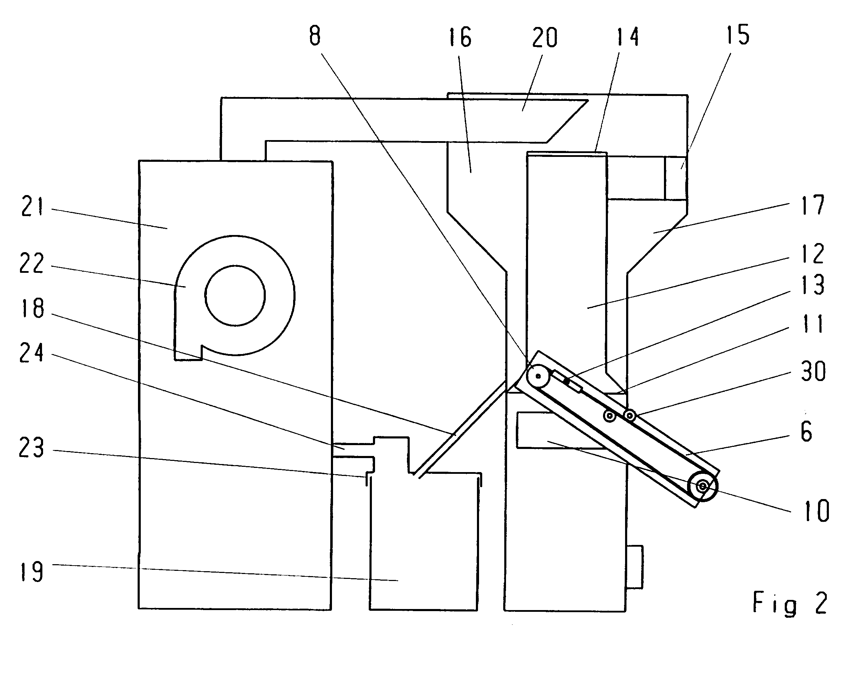

Fig. 2 den Innenaufbau eines Trockenofens,

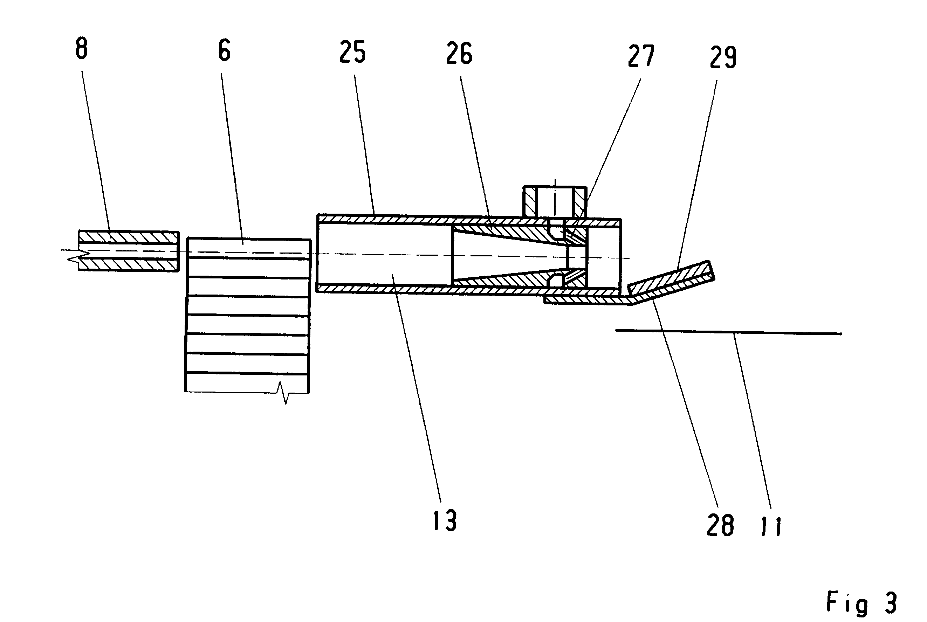

Fig. 3 den Aufbau einer Versprühdüse.

Das mit Schneidgutresten und benutzten Abrasivmittel versetzte Brauchwasser in einer Auffangeinrichtung 1 einer Wasserstrahlschneidanlage wird mit einer Schmutzwasserpumpe 2 über ein Grobfilter zu einem Separator 4 gepumpt. Dort wird das brauchbare Abrasivmittel vom Schlamm und Brauchwasser getrennt und von einem Quetschventil 5 auf einen Zahnbandförderer 6 in Portionen abgelegt. Über dem Zahnbandförderer 6 angebrachte Rollen 30 pressen die Portionen und senken den Brauchwassergehalt in ihnen. Das mit Schlamm versetzte Brauchwasser wird über ein Rohr 7 einem nicht dargestellten Absatzbecken zugeführt. Von einem Druckluftgerät 8 werden die Abrasivmittelportionen in einen Trockenofen 9 geblasen. In den Trockenofen 9 wird die erwärmte Abluft einer nicht dargestellten Hochdruckpumpe gesaugt und mit einer Heizung 10 weiter erwärmt.

In einen mit einem Sieb 11 geschlossenen Steigschacht 12 des Trockenofens 9 werden die Portionen des Abrasivmittels über eine Versprühdüse 13 über dem Sieb 11 eingeblasen. Das noch feuchte und aneinander haftende, jedoch durch die Versprühdüse 13 bereits breit verteilte Abrasivmittel fällt auf das Sieb 11. Vereinzelte, angetrocknete und von Klümpchen abfallende angetrocknete Körner werden vom Luftstrom im Steigschacht 12 empor gesaugt und getrocknet. Der Steigschacht 12 endet an einem Deckel 14, unter dem sich in der Seitenwand des Steigschacht 12 ein Auslaß 15 in eine Wirbelkammer 16 befindet. Die aus dem Steigschacht 12 ausströmende Luft bildet um den Steigschacht 12 herum einen Wirbel, in dem das im Steigschacht 12 getrocknete Abrasivmittel eine Klassifizierung nach der Korngröße erfährt. Dabei werden die großen und brauchbaren Kömer an die Wand der Wirbelkammer 16 getragen und mit einem Trichter 17 über eine Leitung 18 in ein Auffanggefäß 19 geleitet. Leichtteile und Staub verbleiben in der Wirbelmitte und werden aus dem Wirbel mit einem Saugstutzen 20 zur Absaugung 21 gesaugt. Dort wird die Luft gereinigt von einem den gesamten Luftstrom antreibenden Lüfter 22 abgesaugt. Das Auffanggefäß 19 ist mit einem Deckel 23 verschlossen und mit einer daran angesetzten Leitung 24 mit der Absaugung 21 verbunden. Dadurch entsteht in dem Auffanggefäß 19 Unterdruck, so daß ein schwacher Neben luftstrom in der Leitung 18 das Austragen des gewonnen Abrasivmittels unterstützt. Mitgeführter Staub wird dabei aus dem Auffanggefäß 19 mit abgesaugt.

Die Versprühdüse 13 besteht aus einem Düsenrohr 25, in dem ein Düseneinsatz 26 eingesetzt ist. An der Mündung des Düseneinsatzes 26 befinden sich schräg zur Achse des Düseneinsatzes 26 stehende Luftdüsen 27. Das Düsenrohr 25 läuft in einer über dem Sieb 11 stehenden Zunge 28 aus, die mit einem Verschleißmaterial 29 zum Düseneinsatz 26 hin belegt ist. Damit verteilt sich das Abrasivmittel besser und auch das Sieb 11 ist vor dem direken Aufprall von vor dem Düsenrohr 25 versprühten Abrasivmittel geschützt.

### Aufstellung der verwendeten Bezugszeichen

- 1: Auffangeinrichtung
- 2: Schmutzwasserpumpe
- 3: Grobfilter
- 4: Separator
- 5: Quetschventil
- 6: Zahnbandförderer
- 7: Rohr
- 8: Druckluftgerät
- 9: Trockenofen
- 10: Heizung
- 11: Sieb
- 12: Steigschacht
- 13: Versprühdüse
- 14: Deckel
- 15: Auslaß
- 16: Wirbelkammer
- 17: Trichter
- 18: Leitung
- 19: Auffanggefäß
- 20: Saugstutzen
- 21: Absaugung
- 22: Lüfter
- 23: Deckel
- 24: Leitung
- 25: Düsenrohr
- 26: Düseneinsatz
- 27: Luftdüsen
- 28: Zunge
- 29: Verschleißmaterial
- 30: Rolle

## Patentansprüche

1. Vorrichtung zur Abrasivmittelrückgewinnung bei Wasserstrahlschneidanlagen mit einem Separator (4) zur Trennung von brauchbaren Abrasivmittel von Schlamm und Brauchwasser und einem das gewonnene Abrasivmittel unter Abtrennung des Restwassers zu einem Trockenofen transportierenden Bandfilter, dadurch gekennzeichnet, daß dem Separator (4) ein Zahnbandförderer (6) als Transportmittel zum Transport des in Portionen vom Separator (4) ausgeschiedenen, überwiegend brauchbaren Abrasivmittels vor ein an einem Druckufterzeuger angeschlossenes Düsenrohr (8) folgt und daß der mit den Portionen von Abrasivmittel vom Düsenrohr (8) über eine Versprühdüse (13) beschickte Trockenofen (9), der von erwärmter und im Trockenofen (9) weiter erhitzter Abluft durchströmt wird und der aus einem über einer Heizung (10) mit einem Sieb (11) geschlossenen Steigschacht (12), einer daran anschließenden Wirbelkammer (16), einem unter der Wirbelkammer (16) befindlichen Trichter (17) mit einer Leitung (18) zu einem Auffanggefäß (19) für das gewonnene, brauchbare und getrocknete Abrasivmittel und einem Saugstutzen (20) besteht, mit dem Saugstutzen (20) über eine die Abluft filternde Absaugung (21) mit einem Lüfter (22) zum Ansaugen der Abluft verbunden ist.

2. Vorrichtung zur Abrasivmittelrückgewinnung nach Anspruch 1, dadurch gekennzeichnet, daß am Zahnbandförderer (6) auf die Portionen von Abrasivmittel pressende Druckrollen (30) angebracht sind.

3. Vorrichtung zur Abrasivmittelrückgewinnung nach Anspruch 1, dadurch gekennzeichnet, daß die Versprühdüse (13) aus einem vom am Drucklufterzeuger angeschlossenen Düsenrohr (8), über den Zahnbandförderer (6) die Portionen von Abrasivmittel einblasend, beschickten Düsenrohr (25) besteht, in dem sich ein Düseneinsatz (26) befindet, vor dessen Mündung schräg zur Achse des Düseneinsatzes (26) stehende Luftdüsen (27) angeordnet sind.

4. Vorrichtung zur Abrasivmittelrückgewinnung nach Anspruch 3, dadurch gekennzeichnet, daß der untere Teil des Düsenrohrs (25) in eine das Versprühen des Abrasivmittels unterstützende und das Sieb (11) vor Direktaufschlag durch eingesprühte Abrasivmittelportionen schützende Zunge (28) ausläuft.

5. Vorrichtung zur Abrasivmittelrückgewinnung nach Anspruch 4, dadurch gekennzeichnet, daß die Zunge (28) mit Verschleißmaterial belegt ist.

6. Vorrichtung zur Abrasivmittelrückgewinnung nach Anspruch 4, dadurch gekennzeichnet, daß die Zunge (28) mit einem weichen, elastischen Material belegt ist.

7. Vorrichtung zur Abrasivmittelrückgewinnung nach Anspruch 1, dadurch gekennzeichnet, daß der Steigschacht (12) an einem Deckel (14) endet, daß sich unter dem Deckel (14) an der Seitenwand des Steigschachtes (12) ein Auslaß (15) befindet, der den Luftstrom so leitet, daß sich ein Luftwirbel um den Steigschacht (12) in der Wirbelkammer (16) bildet, und daß sich über dem Deckel (14) ungefähr im Zentrum der Wirbelkammer (16) der Eingang für den Saugstutzen (20) befindet.

8. Vorrichtung zur Abrasivmittelrückgewinnung nach Anspruch 1, dadurch gekennzeichnet, daß das Auffanggefäß (19) mit einem Deckel (23) verschlossen und mit einer Leitung (24) zur Erzeugung eines Nebenluftstromes vom Trichter (17) im Trockenofen (9) durch das Auffanggefäß (19) hindurch mit der Absaugung (21) verbunden ist.

## Claims

1. An arrangement for abrasive agent recovery in the case of water jet cutting units with a separator (4) for separating usable abrasive agent from sludge and water and a drying oven (9), wherein a conveyor (6) for transporting the overwhelmingly usable abrasive agent separated in portions by the separator (4) in front of a compressed air unit (8) following the separator (4), and the drying oven (9) loaded with the portions of abrasive agent by the compressed unit (8) via a spraying nozzle (13), warmed exhaust air heated further in the drying oven (9) flows through the oven, and which consists of a climbing shaft (12) closed via a heater (10) with a screen (11), an eddy chamber (16) connected thereto, a funnel (17) located under the eddy chamber (16), with a line (18) to a catching tank (19) for the usable, dried abrasive agent obtained, and a suction connection (20), and a fan (22) for removing the exhaust air is connected with the suction connection (20) via an exhaust chamber (21) filtering the exhaust air.

2. The arrangement for abrasive agent recovery in accordance with Claim 1 wherein compression rollers (3) pressing onto the portions of abrasive agent are mounted on the conveyor (6).

3. The arrangement for abrasive recovery in accordance with Claim 1 wherein the spraying nozzle (13) consists of a nozzle pipe (25), in which a nozzle unit (26) is located, in front of which opening air nozzles (27) are arranged transverse to the axis of the nozzle unit (26).

4. The arrangement for abrasive recovery in accordance with Claims 1 and 3 wherein the lower part of the nozzle pipe (25) runs into a tongue (28) supporting the spraying of the abrasive agent and protecting the screen (11) from direct impact by sprayed portions of the abrasive agent.

5. The arrangement for abrasive recovery in accordance with Claims 1, 3 and 4 wherein the tongue (28) is coated with wearing material.

6. The arrangement for abrasive recovery in accordance with Claims 1, 3 and 4 wherein the tongue (28) is coated with a soft, elastic material.

7. The arrangement for abrasive recovery in accordance with Claim 1 wherein the climbing shaft (12) ends in a cover (14), an outlet (15) is located under the cover (14) on the side wall of the climbing shaft (12), which outlet conducts the air stream so that an air eddy forms around the climbing shaft (12) in the eddy chamber (16), and the intake for the suction connection (20) is located over the cover (14) approximately in the center of the eddy chamber (16).

8. The arrangement for abrasive recovery in accordance with Claim 1 wherein the catching tank (19) is closed with a cover (23) and is connected with a line (24) for generating a secondary air flow from the funnel (17) in the drying oven (9) through the catching tank (19) with the exhaust chamber (21).

## Revendications

1. Le dispositif destiné à récupérer les abrasifs employés sur les installations à découper au jet d'eau à l'aide d'un séparateur (4) permettant de séparer les abrasifs encore utilisables de la boue et des eaux usées, et d'une bande filtrante séparant l'eau résiduelle pendant le transport de l'abrasif récupéré vers une étuve de séchage, est caractérisé en ce que, 'en aval du séparateur (4), est monté un convoyeur à courroie dentée (6) et que ce dernier doit transporter l'abrasif récupéré et réutilisable, trié par le séparateur en portions, devant une tuyère (8) raccordée à un compresseur d'air et que, par la tuyère (8) à buse puis par une buse pulvérisatrice (13), les portions d'abrasifs entrent dans l'étuve (9) par laquelle passe l'air d'évacuation chaud, lequel se chauffant encore plus au sein de l'étuve, laquelle se composant d'une conduite ascendante (12) fermée par un filtre (11) situé au-dessus d'un point de chauffage, d'une chambre de tourbillonnement (16), d'un entonnoir (17) monté sous la chambre de tourbillonnement et doté d'une conduite (18) par laquelle l'abrasif récupéré et séché est amené vers un récipient collecteur (19), relié par un tuyau d'aspiration (20) et un système d'aspiration (21) filtrant l'air sortant actionné par un ventilateur (22) placé en aval et assurant l'aspiration de l'air évacué.

2. Le dispositif selon la revendication 1, destiné à récupérer l'abrasif, est caractérisé en ce que le convoyeur à courroie dentée (6) est doté de galets presseurs (30) dont la taille correspond à la grandeur des portions d'abrasifs.

3. Le dispositif selon la revendication 1, destiné à récupérer l'abrasif valorisable, est caractérisé en ce que la buse pulvérisatrice (13) comprend une tuyère (25) raccordée au compresseur d'air et soufflant les portions d'abrasif sur le convoyeur à courroie dentée, dans laquelle se trouve une insertion (26) devant l'orifice à partir de laquelle des buses à air (27) sont disposées en position inclinée par rapport à l'axe.

4. Le dispositif selon la revendication 3, destiné à récupérer l'abrasif, est caractérisé en ce que la partie inférieure de la tuyère (25) a la forme d'une languette (28) ce qui favorise la dispersion de l'abrasif et protège le tamis (11) contre le contact direct par choc avec les portions d'abrasifs injectés dispersées.

5. Le dispositif selon la revendication 4, destiné à récupérer l'abrasif, est caractérisé en ce que la partie inférieure en forme de languette (28) est dotée d'une couche résistant a l'usure.

6. Le dispositif selon la revendication 4, destiné à récupérer l'abrasif, est caractérisé en ce que la languette (28) est couverte d'un matériau doux élastique.

7. Le dispositif selon la revendication 1, destiné à récupérer l'abrasif, est caractérisé en ce que la conduite ascendante (12) s'arrête devant un couvercle (14) , que sous le couvercle, (14) dans la paroi latérale de la conduite ascendante (12) est prévue ) une sortie (15) conférant au courant d'air une telle orientation que dans la chambre de tourbillonnement (16), se forme un tourbillon d'air autour de la conduite ascendante (12) et que, au-dessus du couvercle (14), se trouve une entrée pour y placer la tuyère (20).

8. Le dispositif selon la revendication 1, destiné à récupérer l'abrasif, est caractérisé en ce que le récipient collecteur (19) est fermé par un couvercle (23) et que ce récipient collecteur est lié au système d'aspiration (21) par une conduite (24) pour générer un courant d'air secondaire passant dans l'étuve (19) par l'entonnoir.
